Europäisches Patentamt

European Patent Office

Office européen des brevets

(11) Publication number: **0 440 360 A1**

## EUROPEAN PATENT APPLICATION

(21) Application number: 91300467.7

(22) Date of filing: 22.01.91

(51) Int. Cl.⁵: **F15B 1/053**, F16L 55/05

(30) Priority: 29.01.90 US 471631

(43) Date of publication of application:
07.08.91 Bulletin 91/32

(84) Designated Contracting States:
BE DE DK ES FR GB LU NL

(71) Applicant: WESTERN ATLAS INTERNATIONAL, INC.
10205 Westheimer Road
Houston Texas 77042(US)

(72) Inventor: Crowell, John M.
4427 Ravine
Friendswood, Texas 77546(US)

(74) Representative: Godsill, John Kenneth et al
Haseltine Lake & Co. Hazlitt House 28
Southampton Buildings Chancery Lane
London WC2A 1AT(GB)

(54) **Flow through accumulator.**

(57) An in-line, flow-through accumulator for use in a hydraulic circuit has a first hollow right circular cylinder (68) sealed at each end to define a housing. A second hollow right circular cylinder (80) is concentrically located within the housing and extends through both ends thereof. The second cylinder defines a annular volume (96) within the housing and has at least one port (98) proximate one end thereof to provide fluid communication through the cylinder and into the annular volume (96). A annular piston (100) is disposed within the annular volume subdividing the volume into a first and a second chamber, the first chamber (106) having a gas at a predetermined pressure equal to approximately one-half the operating pressure of the hydraulic circuit. The second chamber (102) is in fluid communication with the hydraulic circuit through the port (98) in the second cylinder. Appropriate fluid couplings may be provided at each end of the housing for attachment to a hydraulic circuit.

fig. 4

# FLOW THROUGH ACCUMULATOR

This invention relates generally to an accumulator disposed in a fluid-operated system for temporarily storing fluid-pressure energy or absorbing pressure pulsations, and particularly to an in-line, flow-through accumulator used in hydraulic actuators.

Accumulators employed in fluid-operated systems generally consist of either the flow-through (in-line) or bottle type. Such accumulators generally have two chambers separated by a rubber diaphragm, bladder or piston. One of the chambers usually contains a pressurized gas and the other chamber is in fluid communication with the hydraulic fluid circuit. Pressure spikes occurring in the system are absorbed by the expansion and contraction of the diaphragm or bladder, or by translation of the piston within the accumulator.

In-line or flow-through accumulators generally have a cylindrical housing containing a tubular passage coaxially extending therethrough. Each end of the passage is connected to the hydraulic fluid circuit. A portion of the tubular passage extending through the housing may be perforated so as to allow the hydraulic fluid to pass through the walls. The perforated portion of the passage is enclosed by the rubber sleeve or bladder. The volume between the rubber sleeve and the housing contains the pressurized gas. As in the prior example, pressure increases in the system cause the sleeve to expand against the gas thus absorbing the pressure change. Conversely, pressure drops in the hydraulic circuit result in the sleeve being tightly compressed against the passage.

In-line or flow-through accumulators generally have a recurring problem of bladder failure because of the rapid or large pressure spikes which often cause the bladder to be extruded through the perforated tube.

Bottle accumulators may also suffer from the same problem, particularly if the rubber diaphragm or bladder is used in conjunction with a screen. To relieve this problem, certain accumulators have used a piston instead of the diaphragm. Such an accumulator is disclosed in United States Patents 4,835,967, 4,742,473, 4,667,473, 4,644,976 and 4,278,403. In the piston-type of bottle accumulator, a solid piston contains a pressurized gas on one side with the opposite side exposed to the hydraulic circuit. However, a large disadvantage with bottle accumulators is that they restrict the design of many systems due to their size.

There has been a long felt yet unsolved need for an in-line, flow-through accumulator which is capable of withstanding normal-operating pressure variations without the failure of the gas-pressurized chamber.

A flow-through accumulator is provided comprising a cylindrical housing sealed at each end and enclosing a coaxial tube extending the length thereof. A annular volume is defined between the first and second cylinders which contains a gas pressurized annular piston. At one end of the housing the passage is perforated so as to provide fluid communication between the passage and a side of the piston in the annular volume. A pressurized gas may reside in a chamber on the side of the piston opposite the perforated end of the passage. The gas may be charged through a port extending through the housing exterior to a pressure approximately equal to one-half the operating pressure of the hydraulic system. The accumulator may also be equipped with a pressure sensing device which automatically shuts down the hydraulic system upon sensing a predetermined pressure in the gas chamber.

The accumulator consistently absorbs normal-operating pressure variations within the fluid-operating system. A pressure increase in the system causes the fluid within the accumulator to act against the annular piston within the accumulator. When the fluid pressure exceeds the pressure of the gas on the opposite side of the piston, the piston moves and the pressure spike in absorbed. When a pressure drop occurs in the hydraulic system and the pressure of the gas becomes greater than the fluid pressure, the piston moves against the fluid thus increasing the system pressure.

For a better understanding of the invention and to show how the same may be carried into effect, reference will now be made, by way of example, to the accompanying drawings, in which:

Figure 1 is a general illustration of a hydraulic system;

Figure 2 is a hydraulic schematic diagram of the system of Figure 1;

Figure 3 is an enlarged view of an accumulator of the system;

Figure 4 is a elevational cross-section of Figure 3 taken along line 4-4; and

Figure 5 is a transverse cross-section of Figure 4 along line 5-5.

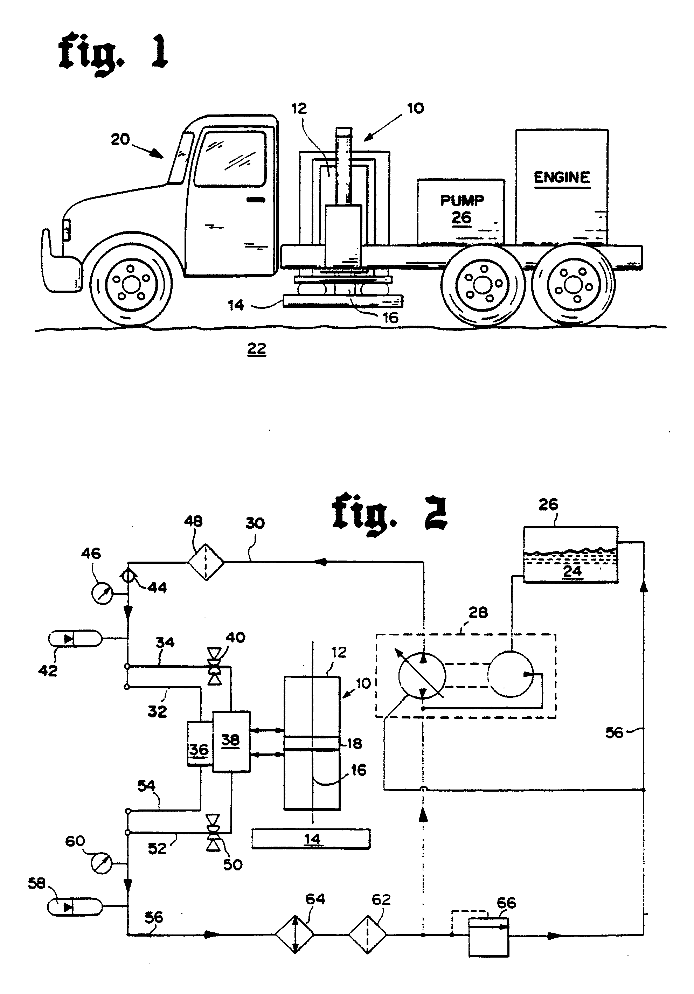

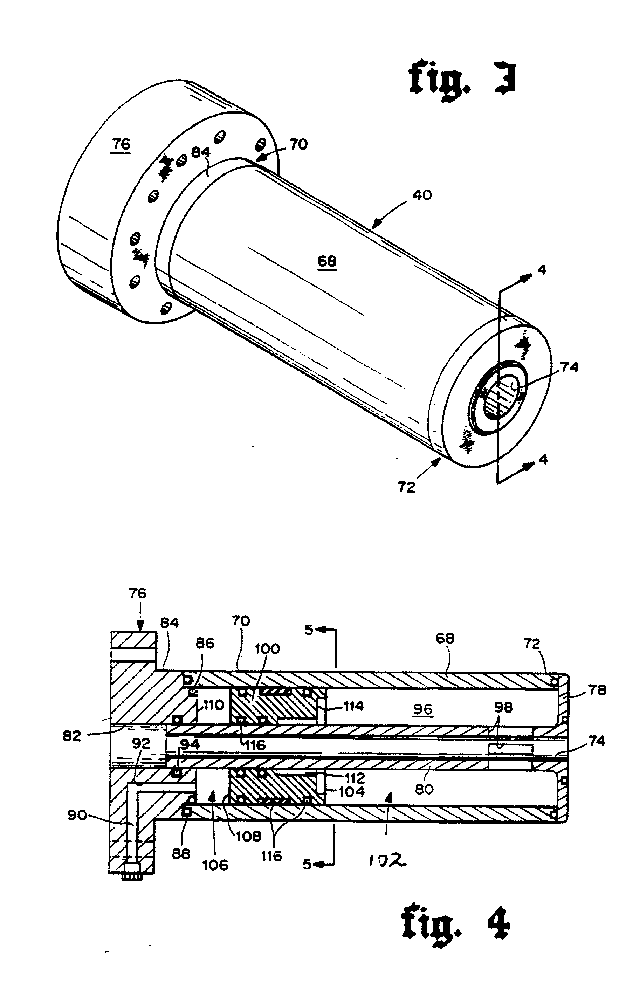

Figure 1 is a general illustration of a hydraulic system. The system depicted is a hydraulic vibrating unit 10 used in the field of geophysical exploration. Seismic vibrators usually include a large mass 12 mechanically coupled to a ground-contacting baseplate 14 by a piston rod 16 (See Figure 2). The vibrator is typically mounted to a vehicle 20 used to transport the vibrator to a desired location on the surface of the earth. The vibrator is then lowered to the ground so as to engage the baseplate 14 with the ground. The reaction mass 12 is then reciprocated along the piston rod 16 which is coupled to the baseplate. The kinetic energy generated by the reciprocating reaction mass 12 is transferred through the baseplate and into the earth 22 to generate a seismic signals.

Figure 2 is a schematic diagram of the hydraulic system operating the vibrating unit 10 shown in Figure 1. Hydraulic fluid 24 is drawn from a reservoir 26 by a pressure-compensated pump 28. The pump drives the fluid at a high pressure (approximately 3600 pounds per square inch fluid (psif)) through a conduit 30 to lines 32 and 34 leading to a pilot valve 36 and a servo valve 38, respectively. In-line with conduit 34 leading to the servo-valve 38 is a flow-through accumulator 40. Coupled in parallel to conduit 30 may a pressure gauge 46 and a well known bottle accumulator 42 having a capacity of approximately five gallons or more. Conduit 30 may also contain a check valve 44 and a filter 48.

The servo valve 38 introduces hydraulic fluid to alternate sides of a piston 18 within the reaction mass 12 causing the reaction mass to reciprocate along the axis of the piston rod 16. Fluid exits the reaction mass 12 through a low pressure side of the servo valve 38 and a flow-through accumulator 50, identical to accumulator 40, located in line 52. Similarly the fluid exiting the pilot valve 36 exits into a low pressure line 54. Both low pressure conduits 52 and 54 flow into line 56 coupled in parallel to a pressure gauge 60 and another bottle accumulator 58. Line 56 then passes through an air-cooled heat exchanger 64 and a low pressure filter 62 before returning to the pump 28. A relief valve 66 may be coupled to line 56 to protect against pressure surges. The relief valve 66 also controls pressure in the low pressure side of the circuit.

Figure 3 is an enlarged perspective view of the exterior of the accumulator 40. The Figure illustates a preferred embodiment of the accumulator as envisioned for use in a seismic vibrator such as disclosed in United States Patent No.4,718,049. The accumulator may generally be described as essentially an hollow right circular cylinder 68 closed at each end 70 and 72. A second hollow right circular cylinder 74 may coaxially extend the length of the housing and through each end 70 and 72. The second cylinder extending through the first defines an annular volume containing a gas charged piston. A perforation through one end of the second cylinder provides fluid communication to a side of the piston opposite the gas charge. Fluid couplings (not shown) may be attached to each end of the passage 74 so as to be coupled to the hydraulic circuit shown in Figure 2.

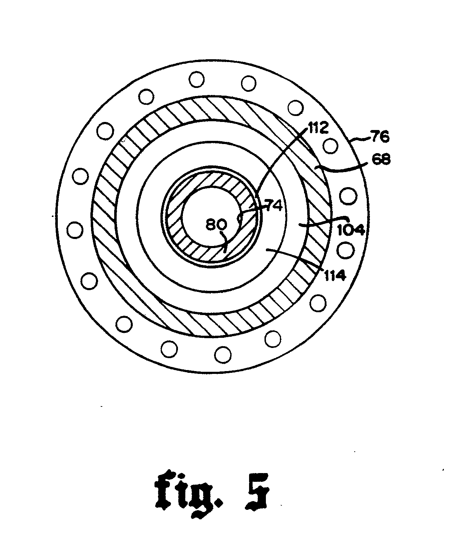

The components comprising the accumulator of the preferred embodiment may best be described with reference to Figures 3, 4 and 5. Figure 4 is a elevational cross-section of Figure 3 taken along line 4-4, while Figure 5 is a transverse cross-section of Figure 4 along the line 5-5.

As briefly mentioned above, the accumulator housing may be a steel hollow right circular cylinder 68 closed at one end 70 by a cap 76 and at the other end 72 by a flange 78. Cap 76 is also preferably manufactured from steel and has a axial port 82 passing therethrough. The cap diameter is preferably reduced at an end 84 to be received in the cylinder 68. At least one O-ring 86 may be disposed about the end 84 to seal with the inside wall of the cylinder 68. A second O-ring 88 may be located in the end 70 of the cylinder 68 to seal with the cap. The cap may also contain a port 90 which intersects a second port 92 parallel to port 82. In a preferred embodiment, the cap may also have a plurality of holes passing through the perimeter of the cap as will become apparent later.

Shown in Figure 4, the flange 78 sealing the end 72 of the housing 68 is integral with a barrel or tube 80. However the flange 78 and the barrel 80 may be separate components provided appropriate seals are provided therebetween. The steel barrel 80, earlier described as the second hollow right circular cylinder, coaxially extends the length of the housing with an end opposite the flange received by the axial port 82 in the cap 76. An O-ring 94 received within a slot defined in the port 82 seals about the barrel 80. The barrel extends the substantially the length of the housing and defines an annular volume 96 between the barrel and the inner wall of the housing. The barrel is breached by at least one and preferably several ports 98 proximate the flange 78. The ports 98 provide fluid communication between the inside of the barrel and the annular volume 96.

Disposed within the annular volume may be an annular piston 100 designed to slide the length of the barrel 80. The piston 100 further divides the volume 96 into a first variable-volume chamber 102 consisting of the volume between the port(s) 98 and a face 104 of the piston face 100. A second similar volume 106 consists of the space located between the opposite face 108 of the piston 100 and an end face 110 of the cap 76. To facilitate translation of the piston within the volume, a portion of the piston's inside diameter 112 is slightly greater than the outside diameter of the barrel 80. This enlarged portion provides appropriate clearance for fluid to flow through the port(s) 98 and into the chamber 102 when the piston 100 is adjacent the port(s) 98. Moreover, a portion 114 of the piston face 104 has been cut-away to allow the fluid to flow between the flange 78 and the piston face 104 when the piston rests against the flange and adjacent the port(s) 98. To prevent the invasion of hydraulic fluid into chamber 106, the inside and outside surfaces of the piston are sealed. Seals 116 such as the Slydring and AQ seals manufactured by Shamban Sealing Systems of Fort Wayne, Indiana, may be used about the piston.

Although not shown in any of the Figures, the flow-through accumulator may also contain an integral pressure sensing device operably coupled to the gas-pressurized chamber. Such a sensor may provide data to an operator on the accumulator status. Additionally, such a sensor may be adapted to shut-down the hydraulic circuit upon sensing a predetermined pressure spike. However, it may be more desirable to locate such a sensor elsewhere in the circuit.

In operation, the accumulator is placed in-line in the hydraulic circuit. In general the end caps of the accumulator may be held within the housing by any well-known clamping system such as consisting of threaded rods and nuts. Alternatively, the housing may be designed slightly different so the end cap and flange/barrel may be bolted directly to the housing. In the preferred embodiment, the housing is received within bore in a vibrator manifold such that the flange 78 is urged against the bottom of the bore and the cap 76 extends slightly from the top of the bore. Bolts may pass through the cap and into the vibrator manifold to secure the accumulator therein. O-ring seals (not shown) may be located between the housing, cap, and vibrator manifold to assure a fluid-tight seal. The hydraulic line 33 may be threadably coupled to the axial port 82 in the cap which connects the accumulator to the fluid system. The opposite end 72 of the accumulator is aligned with a port in the manifold which is in fluid communication with the actuator of the vibrator.

The accumulator is designed so that fluid flow may be in either direction. The fluid passing through the accumulator is allowed to flow through port(s) 98 and into chamber 102. Chamber 106 is charged with a compressible fluid such as nitrogen gas through passages 90 and 92. The gas pressure may vary depending upon the operating pressure of the fluid system but is preferably charged to approximately one-half of the operating pressure of the system. It should be noted that chamber 106 is charged before pressuring-up the hydraulic system. Charging the gas chamber 106 will move the piston off the end wall of the cap. It is also preferred that the chamber 106 contain sufficient gas to prevent the piston from being forced against the end face of the cap during the highest pressure spike expected to occur in the system. An insufficient amount of gas will result in no cushion and may result in the piston impacting upon the cap and perhaps subjecting the system to possible rupture.

The invention has been described with a certain degree of specificity. Variations will occur to those skilled in the art which are within the scope and spirit of this invention.

## Claims

1. A flow-through accumulator comprising a housing (68), a passage (80) extending through the housing (68) to define a volume (96) between the passage (80) and housing (68), the passage having a port (98) for providing fluid communication between the passage (80) and the volume (96) and means (100) for absorbing pressure spikes in the passage (80), characterised in that the absorbing means (100) comprises a piston which is slidably disposed in the volume and which is pressurizeable with gas.

2. An accumulator according to claim 1, wherein said volume is annular and said piston is annular, dividing the volume into a first portion (102) into which the port (18) opens and a second chamber to accommodate pressurized gas.

3. An accumulator according to claim 2, wherein the housing comprises a right circular cylinder (68) having a closure (76, 78) at each end and the passage is defined by a second right circular cylinder (80) extending through each closure (76, 78).

4. An accumulator according to claim 1, 2 or 3, wherein the volume is sealed at one end, and is sealed at the other apart from a port (90) by which the piston can be pressurized with gas.

5. A flow-through accumulator, comprising:
   (a) a sealed housing;
   (b) a passage coaxially extending through the housing defining an annular volume between the passage and the housing, the passage having at least one port for providing fluid communication between the passage and the annular volume; and

6. An in-line accumulator for use in a pressurized fluid system, comprising:
   (a) a housing having a first and a second sealed end;
   (b) a tube coaxially extending through the housing defining a volume between the tube and the housing, the tube having at least one port for providing fluid communication between the tube and the volume; and

(c) a gas-pressurized piston slidably disposed within the volume defining a first chamber opposite the port and a second chamber adjacent the port.

7. An in-line, flow-through accumulator for use in a hydraulic circuit, comprising:

(a) a housing defined by a first hollow right circular cylinder sealed at each end;

(b) a second hollow right circular cylinder concentrically extending through the housing and through each end, and adapted to be coupled in-line to the hydraulic circuit, the second cylinder having an aperture at one end and defining an annular volume between the housing and the second cylinder;

(c) an annular piston slidably disposed within the annular volume to define a first and a second chamber; and

(d) a gas contained in the second chamber at a predetermined pressure.

8. The flow-through accumulator defined by claim 5, wherein the gas-pressurized piston divides the annular volume into a first and a second chamber, the first chamber being in fluid communication with the passage through the port, the second chamber containing a gas.

9. The in-line accumulator as defined by claim 6, wherein the gas-pressurized piston retains a gas in the second chamber.

# fig. 1

# fig. 2

## fig. 3

## fig. 4

**fig. 5**

# EUROPEAN SEARCH REPORT

## EP 91 30 0467

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-1 066 632 (CHENILLAT) <br> * the whole document * <br> — — — | 1,2,5-9. | F 15 B 1/053 <br> F 16 L 55/05 |
| A | US-A-3 454 050 (WOLF) <br> — — — | | |
| A | US-A-2 729 244 (ALASKA) <br> — — — | | |
| A | FR-A-2 410 205 (MESSERSCHMITT) <br> — — — | | |
| A | FR-E-6 728 5 (CHENNILLAT) <br> — — — — — | | |

| | |
|---|---|
| | TECHNICAL FIELDS SEARCHED (Int. Cl.5) |
| | F 15 B <br> F 16 L |

The present search report has been drawn up for all claims

| Place of search | Date of completion of search | Examiner |
|---|---|---|
| The Hague | 13 March 91 | KNOPS J. |